# EUROPEAN PATENT APPLICATION

(11) **EP 4 487 930 A1**
(43) Date of publication of application: **08.01.2025**
(21) Application number: 24186016.2
(22) Date of filing: 02.07.2024
(51) Int. Cl.: A63F 13/5252, A63F 13/54

(54) **A COMPUTER-IMPLEMENTED METHOD FOR GENERATING REVERB IN A VIDEO GAME ENVIRONMENT**

(30) Priority: 06.07.2023 GB 202310387
(71) Applicant: Sony Interactive Entertainment Europe Limited, London W1F 7LP (GB)
(72) Inventor: COCKRAM, Philip, London, W1F 7LP (GB); ARMSTRONG, Calum, London, W1F 7LP (GB); SCHEMBRI, Danjeli, London, W1F 7LP (GB)
(74) Representative: Gill Jennings & Every LLP

(57) **Abstract**

Disclosed herein is a computer-implemented method for generating reverb on an audio signal in a video game environment during gameplay. The method comprises receiving (202) data from a virtual camera arranged in the video game environment during gameplay. The method also comprises processing (204) the virtual camera data to determine one or more features of the video game environment that influence the reverb on an audio signal within the video game environment. The method further comprises generating (206) reverb on an audio signal based on the one or more features of the video game environment.

## Description

### FIELD OF THE INVENTION

The present invention relates to a method for generating reverb in a video game environment. More specifically, the present invention relates to a method for generating reverb in a video game environment during gameplay.

### BACKGROUND

Traditional video game systems output sounds according to events that occur in the video game environment during gameplay. These sounds typically do not vary in nature depending on where the corresponding events originate from in the video game environment with respect to the perspective of the player in the video game environment.

In the natural environment, humans are able to discern where sounds originate from due to the fact that each person has a unique head-related transfer function (HRTF) based on the individual's anatomy. A person's head-related transfer function determines how the inner ear receives a sound from a point in space.

Modern game video game systems are able to provide game players with audio outputs that vary in nature depending on where the sound originated from in the video game environment, these sounds are therefore analogous to those that they would perceive in the real world.

In modern video game design however, reverb zones must be placed manually in video game environments to instruct the video game environment how to reverberate virtual sounds before they are output by the video game system to a game player. This does not account for changes to the video game environment that may occur during gameplay, such as a door opening, unless if such changes are manually programmed.

There is a need to improve the generation of reverb in video game environments during gameplay, therefore.

### SUMMARY OF INVENTION

Described herein is a computer-implemented method for generating reverb on an audio signal in a video game environment during gameplay, the method comprising: receiving data from a virtual camera arranged in the video game environment during gameplay; processing the virtual camera data to determine one or more features of the video game environment that influence the reverb on an audio signal within the video game environment; and generating reverb on an audio signal based on the one or more features of the video game environment.

In an aspect of the present invention there is provided a computer-implemented method for generating reverb on an audio signal in a video game environment during gameplay, the method comprising: receiving data from a virtual camera arranged in the video game environment during gameplay, wherein the virtual camera data comprises depth buffer data; processing the virtual camera data to determine one or more features of the video game environment that influence the reverb on an audio signal within the video game environment, comprising processing the depth buffer data to determine the distance of the one or more features from the virtual camera; and generating reverb on an audio signal based on the determined distance of the one or more features of the video game environment from the virtual camera.

In various embodiments, the depth buffer indicates the distance of a feature(s) or an object in the virtual environment from the virtual camera. As used herein, the terms "feature" and "object" may be used interchangeably. Features in the video game environment may be virtual representations of objects such as walls or ceilings. An object in the video game environment may comprise one or more features, for example.

In this way, reverb on an audio signal can be generated dynamically and automatically in response to changes to features of the video game environment during gameplay. This obviates the requirement for reverb zones to be placed manually in video game environments to instruct the video game environment how to reverberate virtual sounds before they are output by the video game system to a game player.

Preferably, the one or more features each comprise a feature of a surface within the video game environment. Preferably, a feature of a surface comprises one or more of: a position of the surface within the video game environment; a dimension of the sound surface; and the acoustic reflectivity of the sound-reflective surface. In this way, the generation of reverb on an audio signal reverberating off such a surface in the video game environment can more closely represent that that would be perceived by the video game player in the natural environment.

In embodiments, the virtual camera data comprises depth buffer data and the method comprises processing the depth buffer data to determine the distance of an object in the virtual environment from the virtual camera and generating reverb based on the determined distance of an object from the virtual camera. In this way, the generated reverb time on an audio signal in the video game environment can be increased or decreased depending on how far away features of the environment are from the virtual camera. For example, if the depth buffer data indicates that there are likely to be many close by surfaces to the virtual camera, then the generated reverb time is decreased. If the depth buffer data indicates that there are likely to be surfaces far away from the virtual camera, then the generated reverb time is increased. This is consistent with the phenomenon of reverb experienced in the natural environment.

In embodiments, the method comprises: storing the virtual camera data received from the virtual camera in a camera buffer; and processing the stored data in the buffer to determine the one or more features of the video game environment. Preferably, the method comprises, for each virtual camera: storing depth buffer data in a depth buffer; storing image data in an image data buffer; and processing one or both of the depth buffer data and the full image to determine the one or more features of the video game environment. In this way, the dimensions of features of the video game environment and the distance of these features from the virtual camera can be determined. In other terms, a three- dimensional view of the video game environment can be processed. This further improves the accuracy of the generation of reverb on an audio signal in the video game environment.

In embodiments, the method comprises: receiving data from a plurality of virtual cameras, each having a different orientation within the video game environment. In this way, a greater view of the video game environment can be captured by the virtual camera data. The virtual camera data can therefore comprise information of features of the video game environment in a variety of different orientations compared to that that would be obtained by a single virtual camera.

Preferably, the plurality of virtual cameras are arranged such that they are directed outward from the location of a player character in the video game environment. In this way, the view of the video game environment can be obtained by each of the virtual cameras from the perspective of the video game character. Therefore, the reverb generated on an audio signal can be generated from the perspective of the video game character. The audio signals detected from the perspective of the video game character are those that are output to a video game player from the video game environment.

Preferably, six virtual cameras are arranged perpendicularly to one another, corresponding to the six cartesian directions. In this way, the virtual camera data includes information of features of the video game environment above, below and all around the video game character. Features of the video game environment above the video game character, for example the ceiling of a room, can greatly affect the generated reverb time.

Preferably, a primary camera corresponding to a line of sight of the player character provides virtual camera data of a higher resolution than the other virtual cameras. In this way, the reverb generation corresponding to features in the line of sight of the video game character is most accurate. This is advantageous as audio signals reaching a video game character along their line of sight are likely to be more strongly output up than those reaching a video game character from behind them. This is because the human ear is more sensitive to sounds arriving in the line of sight of the person, therefore this represents reality.

Preferably, the plurality of virtual cameras provide a 360-degree field-of-view. In this way, the virtual camera data comprises a complete field of view of the video game environment.

In embodiments, the reverb in the video game environment is calculated from the perspective of the player character. In this way, the reverb generated from the video game environment in most likely to represent what a video game player would hear in reality, if they were situated in an analogous environment.

In embodiments, generating the reverb on the audio signal comprises increasing the reverb if the one or more features indicate the presence of an increased number of sound-reflective surfaces within the video game environment; and, decreasing the reverb if the one or more features indicate the presence of a reduced number of sound-reflective surfaces within the video game environment. In the natural environment, a small, enclosed space would produce a greater amount of reverb than that of a larger enclosed space. The reverb generated from the video game environment therefore closely reflects physical reality.

In embodiments, generating the reverb comprises: inputting the one or more features into a parametric reverb engine. The parametric reverb engine may be configured to compute an output reverb based on one or more input parameters. The parametric reverb engine may increase or decrease a reverb time based on the one or more features. The one or more features may include a determined distance of objects in the video game environment, for example. Additionally in some embodiments, the parametric reverb engine may be configured to adjust the reverb based on the frequency and/or the amplitude of the audio signal within the video game environment.

In embodiments, the parametric reverb engine may adjust predesigned reverb properties of the video game environment based on changes to the video game environment during gameplay. For example, if a wall in the video game environment were to be knocked down during running of the video game, the reverb engine would adjust the designed reverb of the video game environment accordingly.

In embodiments, the method comprises processing the virtual camera data to determine the presence of one or more walls and/or a ceiling within the virtual environment and adjusting the generated reverb accordingly. In this way, the generated reverb time can be calculated more accurately. Large planar surfaces, such as walls and ceilings, can greatly affect the generated reverb time as these surfaces typically reverberate sound waves strongly in the natural environment.

In embodiments, the method comprises repeatedly receiving and processing virtual camera data during gameplay to vary the reverb applied to an audio signal during gameplay. In this way, the generated reverb on an audio signal can be varied depending on events that may have occurred during video game gameplay, such as if a door is opened in the video game environment.

In another aspect of the present invention there is provided a video gaming system comprises a processor configured to perform the steps of the methods described herein.

In another aspect of the present invention there is provided a computer program comprising instructions that, when the program is executed by a computer, cause the computer to perform the steps of the methods described herein.

### BRIEF DESCRIPTION OF DRAWINGS

Embodiments of the invention will now be describe by way of example, by reference to the drawings, in which:
Figure 1 is a schematic diagram of a video game environment in an embodiment of the invention;
Figure 2 is a flow diagram of a computer-implemented method for generating reverb on an audio signal in a video game environment during gameplay in an embodiment of the invention; and
Figure 3 is a flow diagram of a computer-implemented method for generating reverb on an audio signal in a video game environment during gameplay in another embodiment of the invention.

### DETAILED DESCRIPTION

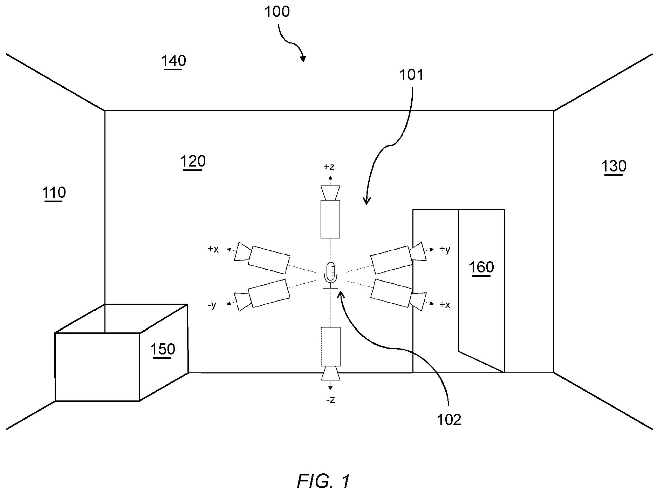

Figure 1 is a schematic diagram of a video game environment 100 in an embodiment of the invention. More specifically, Figure 1 depicts an embodiment of the invention in which data is obtained about features of the video game environment 100, wherein the data is used to generate reverb on an audio signal in a video game environment during gameplay according to the features of the video game environment 100.

Disposed within the video game environment 100 are a plurality of 360-degree field-of-view virtual cameras 101. The virtual cameras 101 are arranged perpendicularly to each other, in orientations corresponding to the six cartesian directions (+x,-x,+y,-y,+z,-z). The plurality of virtual cameras 101 are also arranged in orientations such that each of their respective fields of view are directed outwardly from an audio listener 102. The audio listener 102 corresponds to a video game character situated in the video game environment and is a location within the video game environment from which sound is detected. Sounds detected at the audio listener 102 correspond to what the video game character would "hear" in the video game environment. One of the plurality of virtual cameras may be selected as a primary camera which corresponds to a line of sight of the video game character/audio listener. The reverb on the audio signal in the video game environment is calculated from the perspective of the video game character/audio listener.

The video game environment 100 is a virtual representation of a room in a building and comprises a plurality of walls 110,120,130, and a ceiling 140. The video game environment 100 further comprises a box 150 and an open door 160.

The features within the video game environment, such as the box 150, each comprise surfaces. These surfaces are located and orientated within the video game environment and have specific dimensions. Each of these surfaces may additionally have a specific acoustic reflectivity's associated with them. The acoustic reflectivity of a surface in this case determines to what degree a surface will reverberate sound.

In this example, each virtual camera produces continuous depth buffer data which describes what is in front of the virtual camera. The depth buffer data indicates how far objects in the video game environment 100 are from a particular virtual camera. For example, the virtual camera orientated in the -y direction would produce depth buffer data indicating that the box 150 is nearby to that virtual camera and that the wall 110 is further away from that camera. Collectively, the plurality of cameras 101 are able to produce depth buffer data for the entire video game environment 100 from the perspective of the audio listener 102. The depth buffer data can then be used to generate reverb on an audio signal according to the features of the video game environment 100, such as the walls 110,120,130 and the open door 160.

During gameplay, the features of the video game environment 100 may change. For example, the open door 160 may be closed. The continuous depth buffer data from the virtual camera orientated in the +y direction would indicate that a portion of the wall 120 is now close by to that camera. This depth buffer data can then be used to generate different reverb on an audio signal accordingly due to the changes in the video game environment 100.

In embodiments, one or more of the virtual cameras 101 may have a higher resolution than that of the other virtual cameras in the plurality. A virtual camera in the plurality of cameras 101 may correspond to the line of sight, or the field of view, of the video game character. This camera should have a high, or the highest, resolution. The depth buffer data is most accurate in this particular field of view, which leads to an accurate generation of reverb in that particular field of view. In the natural environment, sounds heard in the line of sight of a person are the most strongly received. By having the depth buffer data being most accurate in the field of view of the video game character, the reverb generation can closely correspond to that that would be heard in a corresponding environment in the natural environment.

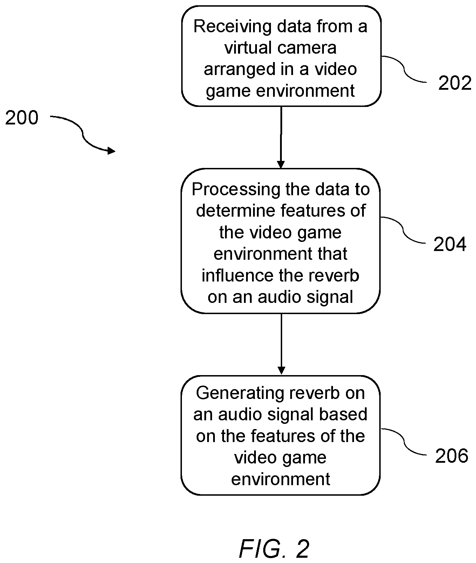

Figure 2 is a flow diagram of a computer-implemented method 200 for generating reverb on an audio signal in a video game environment during gameplay in an embodiment of the invention. Figure 2 is a flow diagram of a computer-implemented method 200 that may be used for generating reverb on an audio signal in the video game environment 100 of the embodiment according to Figure 1, for example.

The method 200 comprises the steps 202, 204 and 206. Step 202 comprises receiving data from a virtual camera arranged in a video game environment. At step 204, the data is processed to determine features of the video game environment that influence the reverb on an audio signal, and at step 206, reverb is generated on an audio signal based on the features of the video game environment.

Step 202 comprises receiving data from a virtual camera arranged in the video game environment during gameplay. The virtual camera corresponds to the field of view of a video game character. During gameplay, the data is received continuously such that the present state of the video game environment in the field of view of the virtual is represented in the data. In this example, the data from the virtual camera comprises depth buffer data indicating the distance of features or objects in the virtual environment from the virtual camera.

The data may additionally comprise normal buffer data, i.e., full image data. This may allow for additional parameters to be derived which may influence the reverb, for example the heights and widths of objects in the virtual environment and the acoustic reflectivity of the surfaces of objects. In embodiments, the normal buffer data may comprise data of the geometry surface normals of meshes of objects in the video game environment that are in the field of view of the virtual camera. The data of the geometry surface normals therefore indicate how sound will reflect off surfaces of objects in the video game environment from the perspective of the virtual camera. In other terms, the data of the geometry surface normals indicate how much sound will be reflected off faces of objects in the video game environment in the direction of the virtual camera. In embodiments, data many be received from a plurality of virtual cameras arranged in different orientations within the video game environment, as described in the embodiment of the invention according to Figure 1.

Step 204 comprises processing the virtual camera data to determine one or more features of the video game environment that influence the reverb on an audio signal within the video game environment. The virtual camera data is processed to determine the size, shape, and location of the features from the perspective of the virtual camera. Such features in the video game environment may be virtual representations of walls, ceilings, or other objects. These features all comprise surfaces that can influence the reverb of an audio signal in the video game environment. The surfaces each have a location, a dimension and a specific acoustic reflectivity in the video game environment and these factors influence the reverberation of audio signals within the video game environment.

At step 206, reverb is generated on an audio signal based on the features of the video game environment. The reverb in the video game environment is generated from the perspective of the virtual camera. As the virtual camera corresponds to the video game character, the reverb is calculated from the perspective of the video game character.

If the depth buffer data indicates that surfaces of features or objects within the video game environment are large and are situated a short distance away from the virtual camera, the generated reverb time may be increased. The reverb time is increased to relate to the fact that sound-reflecting surfaces large and are close by to the virtual camera, and thus the video game character. If the depth buffer data indicates that features or objects within the video game environment are small and are situated a long distance away from the virtual camera, the reverb time may be decreased as fewer sound-reflecting surfaces are close by to the virtual camera.

Sound output from the video game environment to a video game player has reverb applied that closely reflects what the video game player would hear if they were situated in a similar environment in the natural environment, therefore.

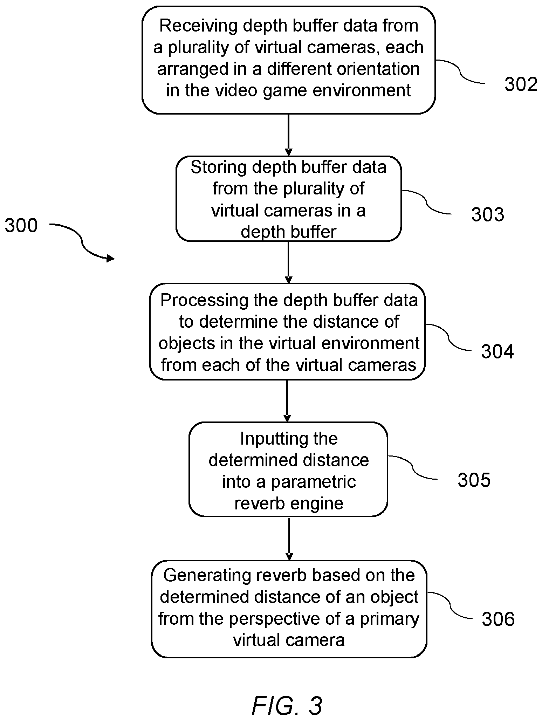

Figure 3 is a flow diagram of a computer-implemented method 300 for generating reverb on an audio signal in a video game environment during gameplay in an embodiment of the invention. Figure 3 is a flow diagram of a computer-implemented method 300 that may be used for generating reverb on an audio signal in the video game environment 100 of the embodiment according to Figure 1, for example.

The method 300 comprises the steps 302, 303, 304, 305 and 306. Step 302 comprises receiving depth buffer data from a plurality of virtual cameras, wherein each camera is arranged in a different orientation in the video game environment. Step 303 comprises storing depth buffer data from the plurality of virtual cameras in a depth buffer. Step 304 comprises processing the depth buffer data to determine the distance of objects in the virtual environment from each of the virtual cameras. Step 305 comprises inputting the determined distance into a parametric reverb engine and step 306 comprises generating reverb based on the determined distance of an object from the perspective of a primary virtual camera.

Step 302 comprises receiving depth buffer data from a plurality of virtual cameras, wherein each virtual camera is arranged in a different orientation in the video game environment, as described in the embodiment of the invention according to Figure 1. During gameplay, depth buffer data is continuously received from each of the plurality of virtual cameras. The present state of the video game environment in the fields of view of the virtual cameras is therefore represented in the depth buffer data. The depth buffer data indicates the distance of features or objects in the virtual environment from the virtual camera.

Additionally, data received from the plurality of virtual cameras may additionally comprise normal buffers which indicate the heights and widths of objects in the virtual environment. In embodiments, the normal buffer data may comprise data of the geometry surface normals of meshes of objects in the video game environment that are in the field of view of a virtual camera. The data of the geometry surface normals therefore indicate how sound will reflect off surfaces of objects in the video game environment from the perspective of that virtual camera. In other terms, the data of the geometry surface normals indicate how much sound will be reflected off faces of objects in the video game environment in the direction of that virtual camera.

Step 303 comprises storing depth buffer data from the plurality of virtual cameras in a depth buffer. The depth buffer data is temporarily stored in a buffer, the depth buffer data can then be processed to determine features of the video game environment at step 304.

Step 304 comprises processing the depth buffer data to determine the distance of objects in the virtual environment from each of the virtual cameras. More specifically, the stored depth buffer data from each of the virtual cameras is processed to determine the distance of features or objects in the video game environment from each of the virtual cameras. If the depth buffer data indicates that large planar surfaces are present in the lateral and upper regions of the video game environment, these surfaces may be identified as walls or ceilings.

In embodiments, where data received from the plurality of virtual cameras additionally comprises normal buffers which indicate the heights and widths of objects in the video game environment, this data also processed to determine three-dimensional aspects of the features or objects. In embodiments where the normal buffer data comprises data of the geometry surface normals of objects in the video game environment that are in the field of view of the virtual cameras, the geometry surface normal data may be processed to determine how much sound will be reflected off objects in the video game environment in the direction of a particular virtual camera.

Step 305 comprises inputting the determined distance into a parametric reverb engine. The parametric reverb engine increases or decreases the reverb time based on the data of the features of the object. Additionally in some embodiments, the parametric reverb engine may be configured to adjust the reverb based on the frequency and/or the amplitude of the audio signal within the video game environment. In some embodiments, the reverb engine may apply amplitude envelopes to the audio signal to reduce reverberation time. In this case, where the depth buffer data indicates a decrease in objects nearby the virtual camera (e.g., when a wall of the video game environment, is knocked down) the reverb engine may trim the amplitude envelope or reduce the reverb time.

In embodiments, the parametric reverb engine may be configured to adjust predesigned reverb properties of the video game environment, made by a videogame designer, based on changes to the video game environment during gameplay. For example, if a wall in the video game environment were to be knocked down during running of the video game, the reverb engine would adjust the designed reverb of the video game environment accordingly by increasing or decreasing the reverb time. In such embodiments, a sound designer may design reverb properties for the video game environment with the wall intact, the sound designer may link the depth buffer data for the video game environment to the parametric reverb engine. The sound designer may also design additional reverb properties for the video game environment for two scenarios, where the wall is either completely or partially knocked down. The most appropriate reverb properties for the video game environment may be selected based on the depth buffer data, wherein the depth buffer data indicates whether the wall is completely or partially knocked down.

Step 306 comprises generating reverb based on the determined distance of an object from the perspective of a primary virtual camera. The primary virtual camera is one of the virtual cameras in the plurality and corresponds to the field of view of a video game character. If the depth buffer data indicates that features or objects within the video game environment are a short distance away from each of the virtual cameras, the reverb time may be increased. The reverb time is increased to correspond to the fact that sound-reflecting surfaces are close by to each of the virtual cameras, and thus surround the video game character. In this scenario during gameplay, the video game character is situated in a small, enclosed space in the video game environment. If the depth buffer data indicates that features or objects within the video game environment are a long distance away from each of the virtual cameras, the reverb time may be decreased as fewer sound-reflecting surfaces are close by to each of the virtual cameras. In this scenario during gameplay, the video game character is situated in a more open space in the video game environment.

## Claims

1. A computer-implemented method for generating reverb on an audio signal in a video game environment during gameplay, the method comprising:
receiving data from a virtual camera arranged in the video game environment during gameplay, wherein the virtual camera data comprises depth buffer data;
processing the virtual camera data to determine one or more features of the video game environment that influence the reverb on an audio signal within the video game environment, comprising processing the depth buffer data to determine the distance of the one or more features from the virtual camera; and
generating reverb on an audio signal based on the determined distance of the one or more features of the video game environment from the virtual camera.

2. The computer-implemented method according to claim 1, wherein the one or more features each comprise a feature of a surface within the video game environment, wherein preferably a feature of a surface comprises one or more of:
a position of the surface within the video game environment;
a dimension of the surface; and
the acoustic reflectivity of the surface.

3. The computer-implemented method according to any preceding claim, wherein the method comprises:
storing the virtual camera data received from the virtual camera in a camera buffer; and
processing the stored data in the buffer to determine the one or more features of the video game environment, wherein preferably the method comprises, for each virtual camera:
storing depth buffer data in a depth buffer;
storing image data in an image data buffer; and
processing one or both of the depth buffer data and the full image to determine the one or more features of the video game environment.

4. The computer-implemented method according to any preceding claim, wherein the method comprises:
receiving data from a plurality of virtual cameras, each having a different orientation within the video game environment.

5. The computer-implemented method according to claim 4, wherein the plurality of virtual cameras are arranged such that they are directed outward from the location of a player character in the video game environment.

6. A computer-implemented method according to claim 5, wherein six virtual cameras are arranged perpendicularly to one another, corresponding to the six cartesian directions.

7. A computer-implemented method according to any of claims 4 to 6, wherein a primary camera corresponding to a line of sight of the player character provides virtual camera data of a higher resolution than the other virtual cameras.

8. A computer-implemented method according to any of claims 4 to 7, wherein the plurality of virtual cameras provide a 360-degree field-of-view.

9. A computer-implemented method according to any preceding claim, wherein the reverb in the video game environment is calculated from the perspective of the player character.

10. The computer-implemented method according to any preceding claim, wherein generating the reverb on the audio signal comprises increasing the reverb if the one or more features indicate the presence of an increased number of sound-reflective surfaces within the video game environment; and, decreasing the reverb if the one or more features indicate the presence of a reduced number of sound-reflective surfaces within the video game environment.

11. A computer-implemented method according to any preceding claim, wherein generating the reverb comprises:
inputting the one or more features into a parametric reverb engine.

12. A computer-implemented method according to any preceding claim, wherein the method comprises processing the virtual camera data to determine the presence of one or more walls and/or a ceiling within the virtual environment and adjusting the generated reverb accordingly.

13. A computer-implemented method according to any preceding claim, wherein the method comprises repeatedly receiving and processing virtual camera data during gameplay to vary the reverb applied to an audio signal during gameplay.

14. A video gaming system comprises a processor configured to perform the method of any preceding claim.

15. A computer program comprising instructions that, when the program is executed by a computer, cause the computer to perform the steps of any of claims 1 to 13.
